# EUROPEAN PATENT APPLICATION

(11) **EP 0 637 500 A2**
(43) Date of publication of application: **08.02.1995**
(21) Application number: 94110907.6
(22) Date of filing: 13.07.1994
(51) Int. Cl.: B29C 63/04, B29C 51/14

(54) **Process for producing vehicle interior panels, device implementing the process, and panel produced thereby**

(30) Priority: 16.07.1993 IT TO930531
(71) Applicant: SATURNO S.p.A MATERIE PLASTICHE, I-10136 Torino (IT)
(72) Inventor: Russo, Salvatore, I-10136 Torino (IT)
(74) Representative: Prato, Roberto

(57) **Abstract**

A process for producing a panel (15) for fitment inside the passenger compartment of a vehicle, the process including a first stage consisting in hot pressing, forming and mutually joining a main supporting sheet (12) and a cover sheet (11); and a second stage consisting in hot folding and stably fixing at least one portion (18) of the edge (16) of the panel (15) on to the surface of the supporting sheet (12) facing away from the cover sheet (11).

## Description

The present invention relates to a process for producing vehicle interior panels, e.g. automobile inside cover or closure panels, and more specifically for producing door inside panels or rear parcel shelves. The present invention also relates to a device implementing the process, and to the panel produced thereby.

As is known, panels of the aforementioned type comprise a relatively rigid supporting frame to which an outer covering, e.g. of fabric or artificial leather, is applied, e.g. hot bonded, as the frame is formed; and the edge of the panel is then trimmed using a blade which provides for folding a short portion of the cover material about the edge of the frame. The cover material however, particularly if relatively soft, tends to shrink gradually and come away from the edge, thus impairing the appearance of the finished panel.

Other known solutions for securing the edge of the cover material to the supporting frame provide for subsequently cold folding peripheral portions of the cover material and securing them firmly to the frame by means of additional elements. In addition to being more expensive, such solutions also involve additional operations, such as removal of sections of the material about the curved portions.

It is an object of the present invention to provide a process for producing vehicle interior panels, designed to overcome the aforementioned drawbacks, i.e. which is relatively straightforward and economical, and provides for preventing the cover material from coming away from the edge, thus ensuring a high standard of quality of the finished panel.

It is a further object of the present invention to provide a straightforward low-cost device for implementing the above process, and a panel produced thereby.

According to the present invention, there is provided a process for producing a panel for fitment inside the passenger compartment of a vehicle; characterized in that it comprises a first stage consisting in hot pressing, forming and mutually joining at least one main supporting sheet and a cover sheet; and a second stage consisting in hot folding and stably fixing at least one portion of the edge of the panel on to the surface of the supporting sheet facing away from the cover sheet.

A number of non-limiting embodiments of the present invention will be described by way of example with reference to the accompanying drawings, in which:
Figures 1 to 4 show schematic lateral cross sections of the dies used for performing a number of stages in the process according to the present invention;
Figure 5 shows a bottom view of part of the device implementing the process according to the present invention;
Figures 6, 7 and 8 show side sections of part of the Figure 5 device at successive stages in the process according to the present invention;
Figure 9 shows a larger-scale view of a portion of the Figure 5 device;
Figures 10a, 10b and 10c show larger-scale views of an edge portion of the panel according to the present invention at successive stages in the process;
Figures 11a and 11b show larger-scale views of an edge portion of a further embodiment of the panel according to the present invention at two successive stages in the process;
Figure 12 shows a larger-scale view of an edge portion of a further embodiment of the panel according to the present invention.

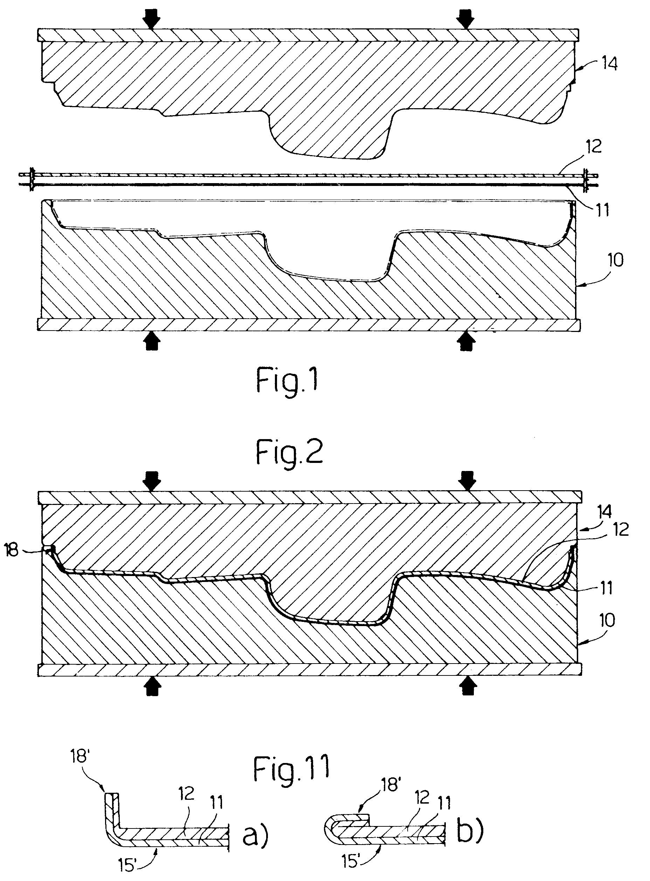

Figure 1 shows a schematic cross section of a bottom die 10 and a top die 14 between which are placed, at a first stage in the process, a sheet 11 of cover material conveniently consisting of artificial leather or synthetic fabric, and a sheet 12 forming the inner supporting body and conveniently consisting of a sheet of relatively rigid material such as polypropylene of the type known commercially as "woodstock". Sheet 11 is conveniently pretreated with known material for adhesion to sheet 12.

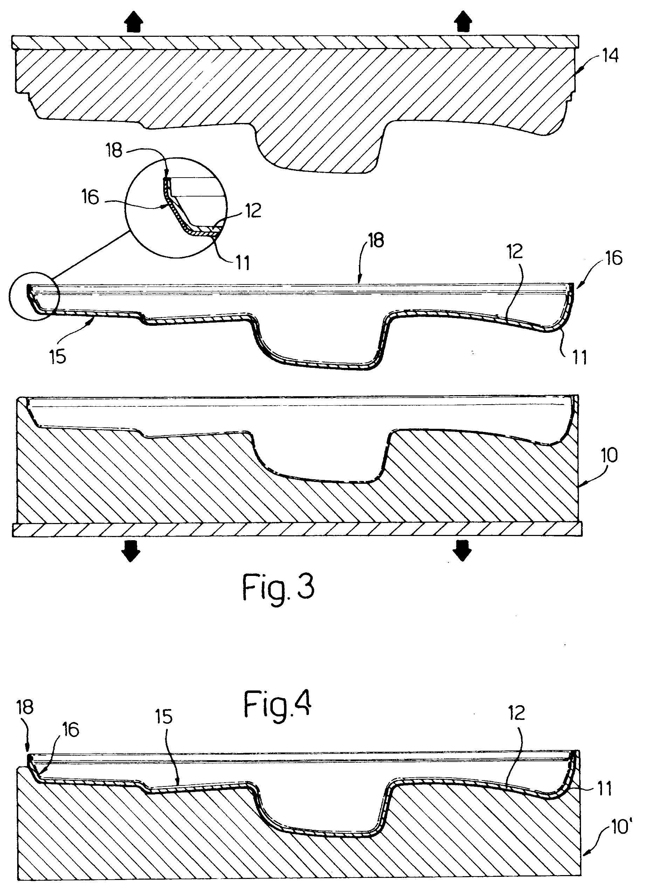

As shown in Figure 2, bottom die 10 and top die 14 are then closed to hot form, e.g. at roughly 170°C, a panel 15 shaped as shown clearly and by way of example in Figure 3 which shows the next stage in the process wherein top and bottom dies 14 and 10 are opened. Simultaneously with pressing of panel 15 at the Figure 2 stage, the surplus material of sheets 11 and 12 projecting beyond the peripheral edge 16 of the pressed panel 15 is trimmed automatically, so that panel 15 (Figure 3) is substantially rectangular with internal portions of different heights defining, on the outer side of sheet 11, supporting surfaces, for example, of a vehicle door inside panel.

As shown clearly in the enlarged detail in Figure 3, peripheral edge 16 of panel 15 presents a thin end portion 18 defined by the shape of bottom die 10 and top die 14, which substantially reduce the thickness of sheet 12.

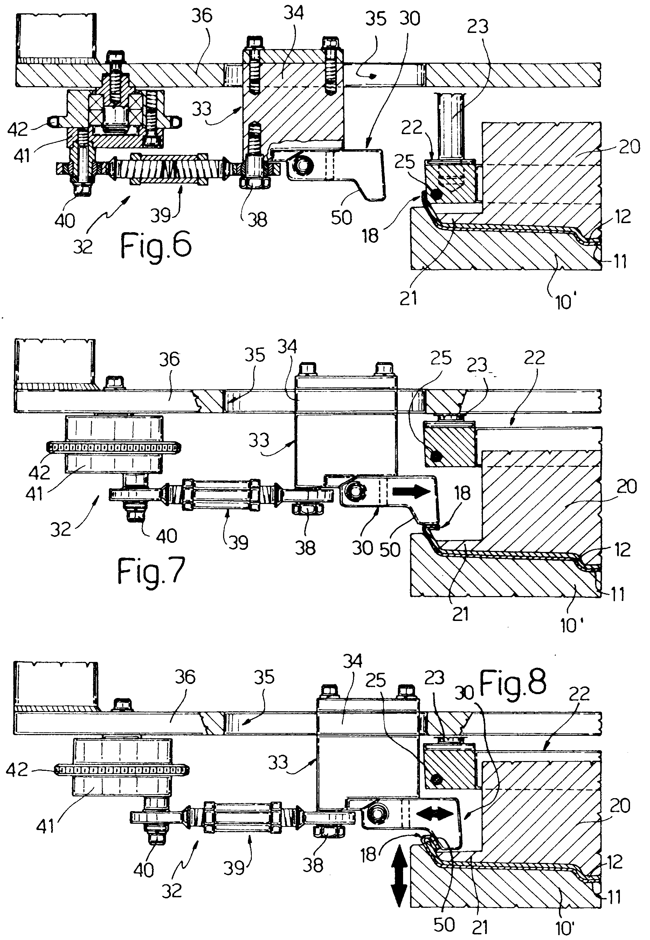

As shown in Figure 4, panel 15 is then placed inside a seating fixture 10' with a cavity of the same shape as bottom die 10, and is clamped by a vertically movable top body 20 (Figure 6). Body 20 is shaped to match the cavity of fixture 10', and presents a low peripheral portion 21 at the bottom enabling vertical movement of a peripheral frame 22 fitted to columns 23 and the bottom outer portion of which houses electric heating elements 25. When peripheral frame 22 is lowered, as shown in Figure 6, its bottom outer portion rests on the thin end portion 18 of peripheral edge 16 of panel 15, which end portion 18 is heated to roughly 150°C and rendered deformable by electric heating elements 25.

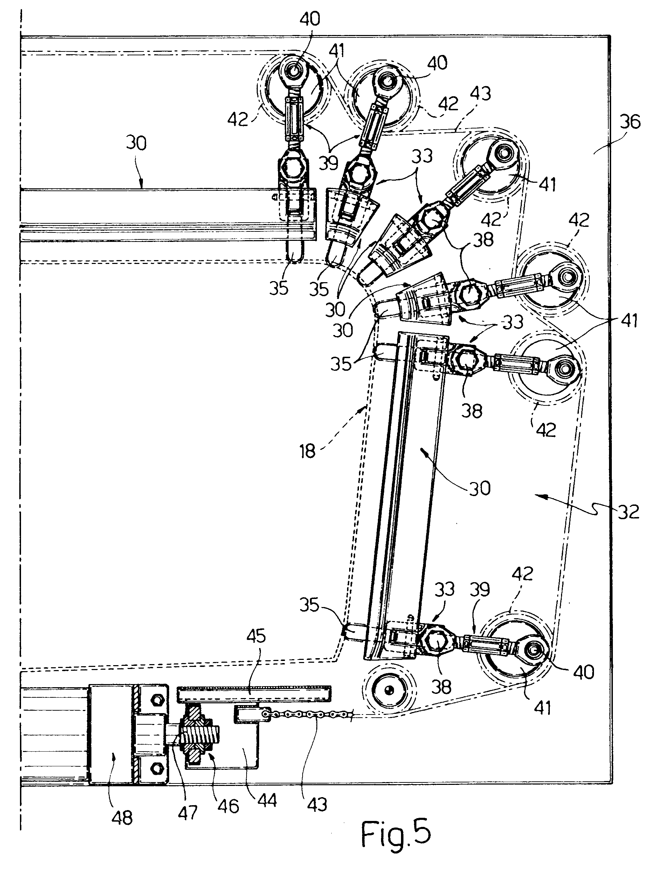

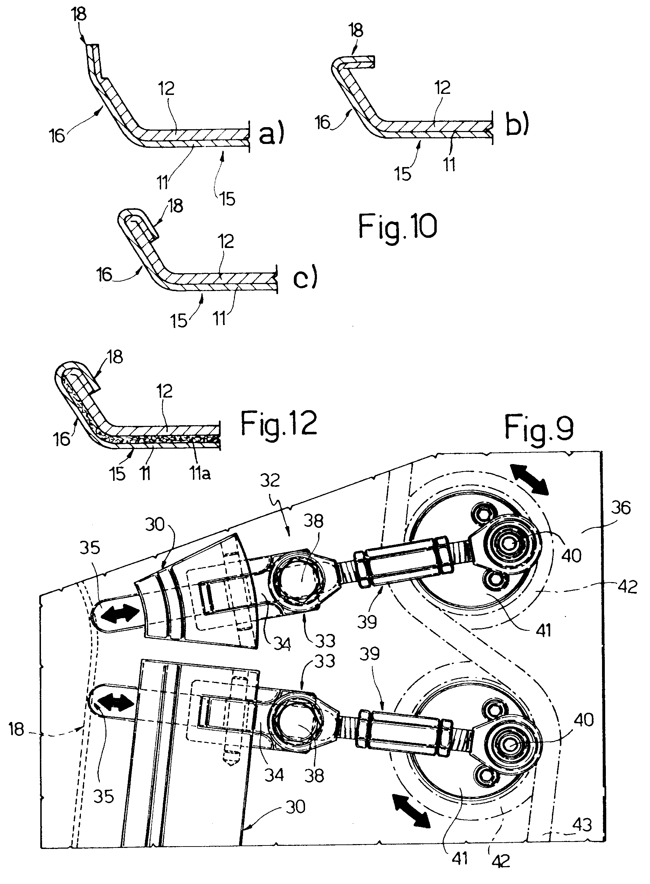

As shown in Figure 7, after raising frame 22, a number of L-shaped blocks 30, moved parallel to the horizontal plane of fixture 10' by a mechanism 32 described later on, are moved on to the outer side of thin end portion 18 of peripheral edge 16 of panel 15. Blocks 30 pivot at the rear on a respective guide body 33 (also shown in Figures 8 and 9) presenting a top portion 34 movable linearly inside a slot 35 formed in a structural plate 36 over body 20. Guide body 33 is fitted at the bottom with a pin 38 to which is connected one end of a rod 39 of adjustable length, the other end of which is connected to a pin 40 projecting from the bottom periphery of a disk 41 (Figure 6) fitted to the bottom face of a respective gear 42 in turn fitted to the underside of plate 36. As shown clearly in Figure 5, a toothed chain 43 extends about portions of gears 42, and presents one end connected to a body 44 movable along a straight guide 45 and presenting a nut screw 46 fitted to a screw 47 connected axially to the shaft of an electric motor 48. When operated in one direction or the other, motor 48 provides for moving body 44 and chain 43 which in turn rotates disks 41 to move guide bodies 33 and L-shaped blocks 30 via rods 39. More specifically, along the straight portions of end portion 18 of peripheral edge 16 of panel 15, there is provided one long block 30 connected to two spaced guide bodies 33 close to the ends of block 30; whereas, along the curved portions of end portion 18 of peripheral edge 16 of panel 15, there are provided a number of spaced, short, sector-shaped blocks 30 connected to respective guide bodies 33.

At the Figure 7 stage, motor 48 is operated to move blocks 30 simultaneously towards the respective portions of end portion 18 of peripheral edge 16 of panel 15, and so fold end portion 18 horizontally towards the center of panel 15 as shown in Figure 10b.

After moving blocks 30 further towards the center of panel 15, fixture 10' and top body 20 are then raised (Figure 8) so as to fold end portion 18 downwards (Figure 10c); and, again by means of motor 48, blocks 30 are moved simultaneously towards the respective folded portions of end portion 18 so as to squeeze the facing inner surfaces of folded end portion 18 into contact with each other; which contact is assisted by the sloping side 50 of blocks 30, which presents substantially the same slope as the corresponding facing wall of the cavity of fixture 10'. As such, the facing inner surfaces of folded end portion 18 of peripheral edge 16 are hot connected permanently to each other, or may even be simply connected contacting each other in permanently stable manner.

At this point, fixture 10' and top body 20 with panel 15 are lowered, and motor 48 operated to move blocks 30 outwards of fixture 10' and so free the finished panel 15.

Panel 15 therefore presents a perfectly folded peripheral edge 16 with both the straight and curved portions covered by sheet 11; is produced relatively simply and cheaply using the process according to the present invention; and may be produced fully automatically with no additional stages for removing material about the curved portions, and with no need for additional fastening elements.

Clearly, changes may be made to the process and device as described and illustrated herein without, however, departing from the scope of the present invention. For example, changes may be made to the design of panel 15 or to the construction characteristics of the device.

As shown for example in Figures 11a and 11b, the panel, indicated 15', may be flat, so that the peripheral edge consists solely of thin end portion 18' defined by the shape of bottom die 10 and top die 14. At the second stage in the process, panel 15' with edge 18' as shown in Figure 11a is placed inside a seating fixture similar to fixture 10', and the heating stage, performed in the same way as in Figure 6 by electric elements 25, is followed by end portion 18' being folded horizontally by blocks 30 in the same way as in Figure 7, to produce panel 15' as shown in Figure 11b.

In a further non-limiting embodiment shown in Figure 12, panel 15 may also comprise a layer 11a of padding material between supporting sheet 12 and cover sheet 11 to obtain a particularly soft panel 15. More specifically, layer 11a does not extend as far as end portion 18 of peripheral edge 16 folded as described above, and is preferably polyester, polyether, polypropylene or polythene foam based.

Among other variations, the device implementing the process according to the present invention may be turned over 180° in relation to the position shown in the accompanying drawings.

## Claims

1. A process for producing a panel (15; 15') for fitment inside the passenger compartment of a vehicle; characterized in that it comprises a first stage consisting in hot pressing, forming and mutually joining at least one main supporting sheet (12) and a cover sheet (11); and a second stage consisting in hot folding and stably fixing at least one portion (18; 18') of the edge (16) of the panel (15; 15') on to the surface of the supporting sheet (12) facing away from the cover sheet (11).

2. A process as claimed in Claim 1, characterized in that, prior to said second stage, said edge portion (18; 18') to be folded is heated.

3. A process as claimed in Claim 2, characterized in that, prior to said second stage, said edge portion (18; 18') is heated to about 150°C.

4. A process as claimed in one of the foregoing Claims, characterized in that, at said first stage, said edge portion (18; 18') of the panel (15; 15') to be folded is formed of a lesser thickness.

5. A process as claimed in one of the foregoing Claims, characterized in that, at said second stage, facing surface portions of said supporting sheet (12) are stably connected to each other.

6. A device for producing a panel for fitment inside the passenger compartment of a vehicle, characterized in that it comprises means for implementing a process as claimed in one of the foregoing Claims.

7. A device as claimed in Claim 6, characterized in that it comprises at least one die (10') for positioning said panel (15; 15') during said second stage; said die (10') presenting a cavity identical to that of a die (10) for performing said first stage.

8. A device as claimed in Claim 6 or 7, characterized in that it comprises means (25) for heating said edge portion (18; 18') of said panel (15; 15') prior to said second stage.

9. A device as claimed in Claim 8, characterized in that said heating means comprise a frame (22) movable towards said edge (16) of said panel (15; 15') and fitted with electric heating elements (25).

10. A device as claimed in one of the foregoing Claims from 6 to 9, characterized in that it comprises means (30) for folding, at said second stage, at least one portion (18; 18') of the edge (16) of said panel (15; 15') on to the surface of said supporting sheet (12) facing away from said cover sheet (11).

11. A device as claimed in Claim 10, characterized in that said folding means comprise means (32) for moving elements (30) against said portion (18; 18') of the edge (16) of said panel (15; 15').

12. A device as claimed in Claim 11, characterized in that said folding means comprise means (32) for moving said elements (30) in a direction parallel to the plane of said supporting sheet (12).

13. A device as claimed in Claim 11 or 12, characterized in that said folding means comprise means for moving said elements (30) in relation to said panel (15) and in a direction perpendicular to the plane of said supporting sheet (12).

14. A panel for fitment inside the passenger compartment of a vehicle, characterized in that it is formed using the process or device as claimed in one of the foregoing Claims.

15. A panel as claimed in Claim 14, characterized in that said portions (18; 18') of the edge (16) of said panel (15; 15') which are folded on to the surface of said supporting sheet (12) facing away from said cover sheet (11) comprise straight and curved portions.

16. A panel as claimed in Claim 14 or 15, characterized in that it is a cover element for covering a surface in said passenger compartment.

17. A panel as claimed in Claim 14 or 15, characterized in that it is a cover element for closing a compartment in said passenger compartment.

18. A panel as claimed in one of the foregoing Claims from 14 to 17, characterized in that it comprises a layer (11a) of padding material interposed between said supporting sheet (12) and said cover sheet (11) and selected from the following materials: polyester foam, polyether foam, polypropylene foam, polythene foam.
